# EUROPEAN PATENT APPLICATION

(11) **EP 2 100 707 A1**
(43) Date of publication of application: **16.09.2009**
(21) Application number: 08004638.6
(22) Date of filing: 13.03.2008
(51) Int. Cl.: B29B 11/14, B65D 1/02, B29C 49/06, B29B 11/08

(54) **Plastic preform having a low weight sealable neck finish**

(71) Applicant: LA SEDA DE BARCELONA S.A., 08820 El Prat De Llobregat, Barcelona (ES)
(72) Inventor: Degroote, Laurent, 59190 Caestre (FR); Duchateau, Roald, 2930 Brasschaat (BE)
(74) Representative: Matkowska, Franck

(57) **Abstract**

The plastic preform (1) comprises a heat sealable neck finish (2) having at least a first upper heat sealable portion (20) which is terminated by a top opened end (200), a second intermediate threaded portion (21) for screwing a closure cap, and a third lower portion (22) that comprises a neck support ring (221a) of width (L1). The first upper portion (20) comprises an annular gripping recess (201) of predetermined height (H2) and depth (d). The inner face of the third lower portion (22) forms an inward transition step (221 b), and the outer diameter (D3) of the preform measured just below the neck support ring (221a) is less than the outer diameter (D2) of the neck finish measured just above the said inward transition step (221 b).

## Description

### Field of the invention

The present invention related to a plastic preform having a novel low weight and heat sealable neck finish, and to a container obtained by biaxially stretching said preform and suitable to be hermetically closed by heat welding a sealing foil onto the container neck finish.

### Prior art

In the field of plastic packaging, it is a common practise to use heat sealed thermoplastic containers for storing sensitive products, like for example dairy products (UHT milk, yoghurt, cream, , ...). In this field, the opened end of the neck finish of a thermoplastic rigid container is hermetically closed by heat welding a sealing foil onto a top sealing surface of the container neck finish. The heat welding operation is performed in such a way that the sealing foil hermetically closes the container and avoids, for example, any leakage of the product that is stored in the container. The heat welding operation is also performed in such a way that the sealing foil is efficiently bonded with the container, but can be however pealed off manually by the final consumer for opening the container.

In order to protect this sealing foil, the neck finish further comprises a threaded part for screwing a removable plastic cap on the neck finish.

There are different kinds of heat weldable sealing foils that are available and disclosed in the prior part for hermetically closing a thermoplastic rigid container. A heat weldable sealing foil generally comprises at least two laminated layers: a thermal conductive layer, and a heat weldable layer.

In most cases, the thermal conductive layer is a metal layer having a good thermal conductivity, such as for example an aluminium foil. An aluminium layer exhibits also very high gas barrier properties. The use of a sealing foil comprising an aluminium layer advantageously prevents gas transmission in or out of the container, and thereby increases the shelf life of the product stored in the container.

The heat weldable layer is a generally made of a thermoplastic film, such a as for example a polyethylene film, coated onto one face of the thermal conductive layer.

The heat welding operation of the sealing foil onto the container is performed by heating the sealing foil in such a way that the heat weldable layer is melted, and by mechanically pressing the heated sealing foil against the top sealing surface of the container neck finish, the melted heat weldable layer being in contact with the said top sealing surface.

The heating of the heat weldable layer of the sealing foil can be obtained by means of different heating processes. The most commonly used heating processes involve either a conductive heating of the sealing membrane, or an inductive heating of the sealing membrane, by means notably of HF energy.

Typically, heat sealable neck finish are characterized by a thick wall, because the wall thickness of the neck finish must be large enough to withstand the mechanical top load exerted on the neck finish during the heat welding operation. There is however a commercial interest to lower the weight of a heat sealable neck finish without impairing its mechanical resistance to top load.

In addition a well-known technique for manufacturing a thermoplastic container is the so-called injection stretch-blow moulding technique, wherein a preform is injection moulded (first step), and is subsequently biaxially stretched in a mould (second step). In a so-called "one stage process", the second step (stretch-blow moulding) is performed in line immediately after the first step (preform injection). In a so-called "two stages process", the second step (stretch-blow moulding) is postponed, and a reheating of the preform is performed before the stretch-blow moulding operation.

In both kinds of process (one stage process or two stages process), during the biaxial stretching of the preform, the neck finish of the preform is not stretched and is used for centring and supporting the preform in a mould. To this end, the neck finish of a preform usually comprises in its lower part a protruding collar. The under face of this collar forms an annular neck-support ring. During the stretch-blow moulding step, this neck support ring is supported by an annular shoulder part in the mould, while the body of the preform underneath this neck support ring is being biaxially stretched.

The contact area between the neck support ring (NSR) and the mould must be large enough to efficiently maintain the preform in the mould during the biaxial stretching. This leads to use a neck collar of large diameter, which needlessly increases the neck finish weight.

A neck finish can also comprise a so-called "tamper zone" delimited by a protruding circumferential ledge -called tamper bead -that is located above the collar and spaced apart thereof. This tamper bead is mainly used for retaining a tamper skirt of the cap that is knowingly detached from the cap at first opening.

The neck support ring (NSR) and the tamper bead are also advantageously used for grasping or gripping the preform or container during handling operations. To this end, a handling grip is knowingly inserted between the collar and the tamper ledge.

When the neck finish does not comprise such a tamper ledge, the grasping of the neck finish can be also sometimes achieved by means of a handling grip that is inserted between the neck support ring and the lower part of the protruding thread that is used for screwing a removable cap on the neck finish.

### Objective of the invention

One objective of the invention is to propose a plastic preform that can be biaxially stretched in order to form a container of higher volume, and that exhibits a novel heat sealable neck finish. This novel heat sealable neck finish enables to lower the weight of the preform without prejudice for the mechanical resistance of the neck finish to top load, and can still be easily grasped or gripped by means of usual handling grip(s).

### Summary of the invention

This objective is achieved by the plastic preform of claim 1. This plastic preform of the invention comprises a heat sealable neck finish having at least a first upper heat sealable portion which is terminated by a top opened end, a second intermediate threaded portion for screwing a closure cap, and a third lower portion that comprises a neck support ring of width (L1). The first upper portion comprises an annular gripping recess of predetermined height (H2) and depth (d). The inner face of the third lower portion forms an inward transition step, and the outer diameter (D3) of the preform measured just below the neck support ring is less than the outer diameter (D2) of the neck finish measured just above the said inward transition step.

The invention also relates to container obtained by biaxially stretching the aforesaid preform, and to a packaging assembly comprising such a container, and wherein the container neck finish is sealed with a heat welded foil.

The container of the invention can be advantageously used for storing dairy beverage, such as for example U.H.T milk.

### Brief description of the drawings

The technical characteristics and advantages of the invention will appear more clearly on reading the following detailed description which is made by way of non-exhaustive and non-limiting examples, and with reference to the appended drawings, as follows:
- Figure 1 shows a thermoplastic preform having a neck finish made accordingly to a first variant of the invention,
- Figure 2 is an enlarged view, in cross section, of the neck finish of the preform of figure 1,
- Figure 3 is an enlarged view, in cross section, of the neck finish of the preform of figure 1, closed by a heat welded sealing foil,
- Figure 4 is a view in cross section of the neck finish of a preform made accordingly to a second variant of the invention,
- Figure 5 is a view in cross section of the neck finish of a preform made accordingly to a third variant of the invention.

### Detailed description

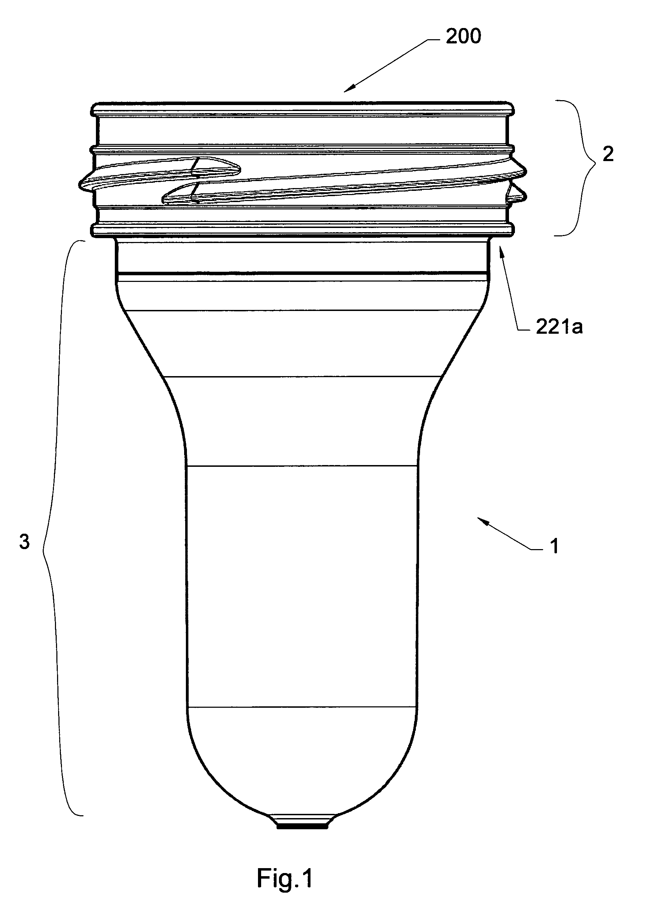

Figure 1 shows a thermoplastic preform 1 of the invention having a heat sealable neck finish 2 and a tubular body 3 closed at its bottom end. Directional words such a as "upper" "lower', "top", "above", "below", "underneath", "horizontal", "vertical" are employed therein by way of description and not limitation with respect to the vertical and upright orientation of the preform illustrated in figure1.

This preform 1 is manufactured by the well-known technique of injection moulding. Within the scope of the invention, this preform 1 can be a monolayer preform or a multilayer preform. This preform 1 can be made of any known thermoplastic polymer that can be processed by injection moulding in order to form a preform. Polyester polymers, and in particular homo or copolymer of PET, are the most commonly used, but the invention is however not limited to these particular polymers.

This preform 1 is an intermediary product that is subsequently biaxially stretched in a mould in a standard way, in order to form a final container of higher volume. This biaxial stretching is for example performed by using the well-known stretch-blow moulding technique (one stage or two stages process). When the preform 1 is biaxially stretched, the neck finish 2 is not modified, and only the tubular body 3 of the preform underneath the neck finish 2 is biaxially stretched. The final container and the preform 1 have thus the same neck finish 2.

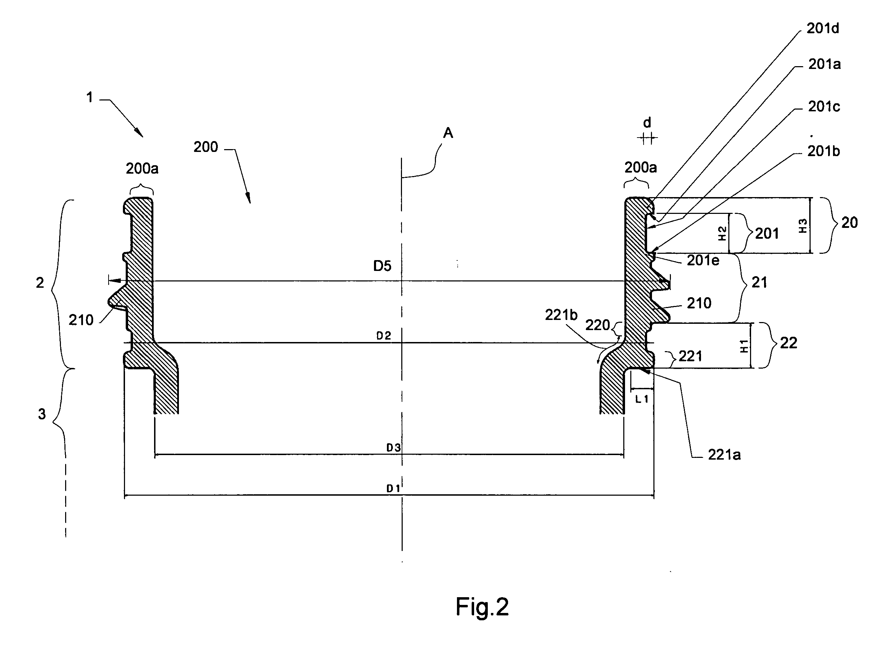

Referring to figure 2, in a first variant the heat sealable neck finish 2 is made of three portions:
- a first upper cylindrical portion 20 of height H3, which is terminated by a top opened end 200,
- a second intermediate threaded portion 21,
- a third lower portion 22 of height H1.

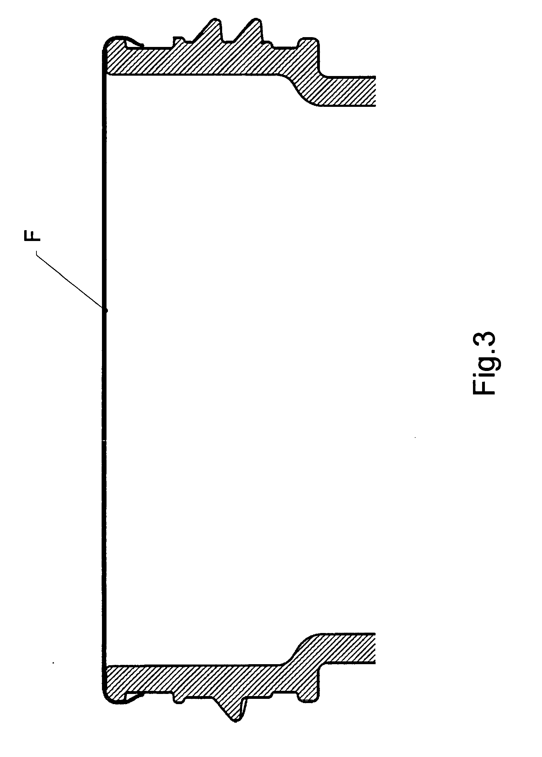

The opened end 200 of the heat sealable neck finish 2 comprises a top sealing annular flat surface 200a that encircles an opening. As illustrated in figure 3, this opened end 200 can be closed by a sealing foil F that has been heat welded onto the top sealing surface 200a of the neck finish 2. The welding of the foil can be performed by means of any known heat welding technique. The structure and material(s) of this sealing foil F are not important for the invention.

The height H3 of the upper cylindrical portion 20 has to be sufficient for receiving the sealing foil. Typically, the height of standard sealing foils is not more than 4 mm and the height H3 of the upper cylindrical portion 20 is thus preferably not less than 5 mm.

The outer face of this upper cylindrical portion 20 further comprises an annular gripping recess 201 of height H2 and depth d. This gripping recess 201 is formed by two circumferential horizontal shouldering portions 201 a, 201 b and by a substantially cylindrical and vertical band 201 c. More particularly, in the variant of figure 2, the upper shouldering portion 201 a is formed by the lower face of a top edge 201d of the neck finish 2, and the lower shouldering portions 201 b is formed by the upper face of circumferential ledge 201e.

The height H2 and depth d of this recess 201 are sufficient for enabling the grasping or gripping of the neck finish 2 by means of standard grips that are widely used in the packaging industry for handling preforms or plastic bottles. To this end, the height H2 is preferably not less than 1.5 mm, and the depth d is preferably not less than 0.5 mm.

The second intermediate threaded portion 21 is knowingly designed and used for screwing a closing cap onto the neck finish 2. This threaded portion 21 comprises an external protruding thread 210. The term "thread" is employed therein in its usual broad sense and includes both partial and full helical threads, and both continuous and interrupted threads.

The third lower portion 22 comprises an upper cylindrical part 220 and a transition part 221.

The outer face of the transition part 221 of the preform forms an annular flat shouldering surface 221 a (called therein "neck support ring") of width L1 and outer diameter D1, that is substantially perpendicular to the longitudinal axis A of the preform. This neck support ring 221a is used for centring and supporting the preform 1 in the stretch-blow mould, during the manufacturing of the final container. The width L1 of this neck support ring 221a has to be sufficient for efficiently maintaining the preform inside the mould during the stretching of the preform. Typically, the width L1 of the neck support ring 221 a is preferably not less than 1.5mm.

The inner face of the preform 1 in the transition part 221 forms an inward transition step 221b, and the outer diameter D3 of the preform measured just below the neck support ring 221a is less than the outer diameter D2 of the neck finish measured just above the inward transition step 221b. Thanks to this difference between diameters D2 and D3, the outer diameter D1 of the neck support ring 221 a can be advantageously reduced without reducing the width L1 that is needed for achieving the supporting function. This diameter reduction of the neck support ring 221a leads to a weight reduction in third lower portion 22, and can be advantageously used for reducing the weight of the neck finish, or for making a neck finish having a thicker wall, without increasing the weight thereof.

In order to obtain a significant weight reduction in third lower portion 22, the difference Δ between outer diameter D2 and D3 (Δ = D2-D3) is preferably not less than 1.5mm.

In the particular variant of figure 2, the outer diameter D1 of the neck support ring 221 a is higher than the outer diameter D2 of the neck finish measured just above the inward transition step 221 b, in such a way that a part of the neck supporting 221 a is projecting outside from the outer cylindrical upper part 220. The radial dimension (D1-D2) of this projection is however advantageously small. In this particular variant, the outer diameter D1 is actually less than the outer diameter D5 of the protruding thread 210 of the thread portion 21.

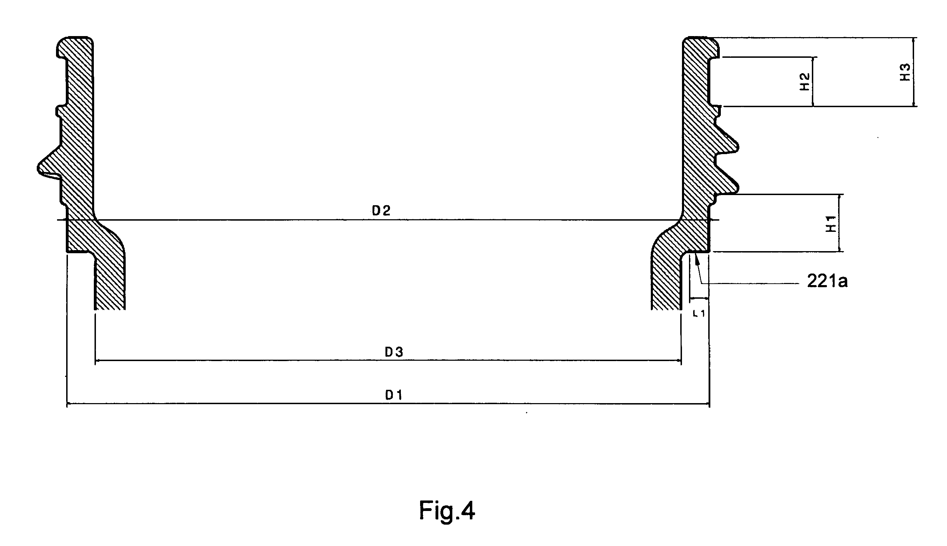

Within the scope of the invention, it is not necessary that the neck support ring 221a forms such a projection. In another variant of the invention, the neck finish 2 can be designed in such a way that outer diameter D1 is not more than outer diameter D2, and is for example equal to diameter D2, as shown on the particular variant of figure 4.

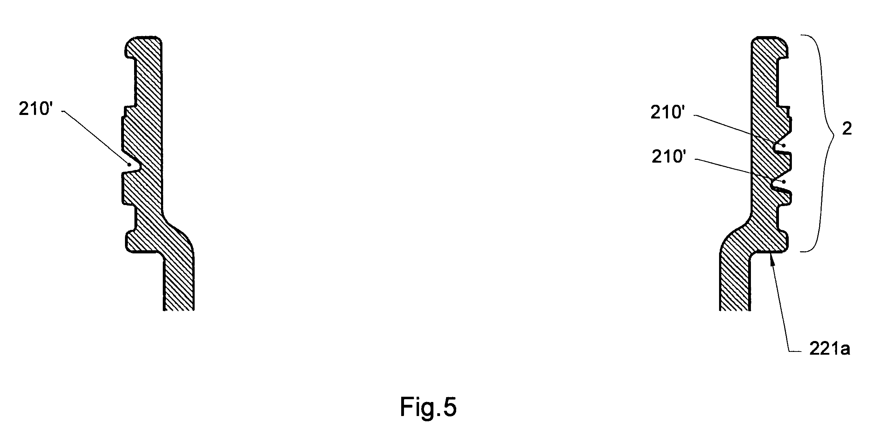

In order to advantageously save material weight in the threaded portion 21 of the neck finish, the protruding thread 210 of figures 2 or 4 can be replaced by a grooved thread 210' as the one shown in the particular variant of figure 5.

The invention is not limited to the particular variants illustrated in appended figures, but the scope of the invention encompasses any preform having the heat sealable neck finish defined in appended claim 1.

## Claims

1. A plastic preform comprising a heat sealable neck finish (2) having at least a first upper heat sealable portion (20) which is terminated by a top opened end (200), a second intermediate threaded portion (21) for screwing a closure cap, and a third lower portion (22) that comprises a neck support ring (221 a) of width (L1), wherein the first upper portion (20) comprises an annular gripping recess (201) of predetermined height (H2) and depth (d), wherein the inner face of the third lower portion (22) forms an inward transition step (221 b), and wherein the outer diameter (D3) of the preform measured just below the neck support ring (221 a) is less than the outer diameter (D2) of the neck finish measured just above the said inward transition step (221 b).

2. The preform of claim 1, wherein the height (H2) of the gripping recess is not less than 1.5 mm.

3. The preform of claim 1 or 2, wherein the depth (d) the gripping recess is not less than 0.5 mm.

4. The preform of any one of claims 1 to 3, wherein the width (L1) of the neck support ring (221 a) is not less than 1.5mm.

5. The preform of any one of claims 1 to 4, wherein the outer diameter (D1) of the neck supporting (221a) is less than the outer diameter (D5) of the threaded portion (21).

6. The preform of any one of claims 1 to 5, wherein the difference (Δ) between the outer diameter (D2) of the neck finish measured just above the said inward transition step (221 b) and the outer diameter (D3) of the preform measured just below the neck support ring (221 a) is not less than 1.5 mm.

7. The preform of any one of claims 1 to 6, wherein, the outer diameter (D1) of the neck supporting is not more than the outer diameter (D2) of the neck finish measured just above the said inward transition step (221 b).

8. The preform of any one of claims 1 to 7, wherein the intermediate thread portion (21) comprises a grooved thread (210').

9. A container obtained by biaxially stretching the preform of any one of claims 1 to 8.

10. A packaging assembly comprising a container of claim 9, and wherein the container neck finish (2) is sealed with a heat welded foil (F).

11. The use of the container of claim 9 or packaging assembly of claim 10 for storing dairy beverage.
